Europäisches Patentamt

European Patent Office

Office européen des brevets

(19)

(11) **EP 1 206 150 A1**

(12) **EUROPEAN PATENT APPLICATION**

(43) Date of publication:
**15.05.2002 Bulletin 2002/20**

(51) Int Cl.⁷: **H04Q 7/36**

(21) Application number: **00310068.2**

(22) Date of filing: **13.11.2000**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **LUCENT TECHNOLOGIES INC.
Murray Hill, New Jersey 07974-0636 (US)**

(72) Inventors:
• **Eloy, Stephane
92400 Courbevoie (FR)**
• **Falaki, Hamid Reza
Swindon, Wiltshire SN5 5AA (GB)**

• **Karimi, Hamid Reza
Swindon, Wiltshire SN5 5BJ (GB)**
• **Goff, Yvon le
22700 Perros-Guirec (FR)**
• **Young, Gordon Peter
Bracknell, Berkshire RG42 1YL (GB)**

(74) Representative:
**Buckley, Christopher Simon Thirsk et al
Lucent Technologies (UK) Ltd,
5 Mornington Road
Woodford Green, Essex IG8 0TU (GB)**

(54) **Enhanced cell range in time division duplexed utran**

(57)    In a UTRAN operating time division duplexing, one time slot 22(11) in each frame is maintained in a no-transmit condition, all preceding time slots 22(1) to 22 (10) being uplink time slots and all succeeding time slots 22(12) to 22(15) being down link time slots (or vice versa). Cell size is markedly increased.

FIG. 3

EP 1 206 150 A1

**Description**

This invention relates to the Universal Mobile Telephone System (UMTS), especially to the Time Division Duplexing (TDD) option in the UMTS Terrestrial Radio Access Network (UTRAN), and concerns a method and apparatus for enhancing cell range.

In a cellular mobile system such as UMTS, each cell conventionally has a single source of transmission to and reception from the rest of the network. In a Time Duplexing Multiple Access (TDMA) system, the time delay for a transmitted signal to reach a mobile terminal and for the response signal to be received by the controlling base station, is one factor which limits the size of the cell.

In the third generation specification of the European Telecommunications Standards Institute (ETSI), the Technical Specifications for the UTRAN provide for two types of air interface. For macro cells, Frequency Division Duplexing (FDD) is specified while TDD is specified for pico cells and micro cells. The TDD option is further divided into two bands of chip rate operation, one with 3.84 Mcps (Mega chips per second) and the other with 1.28 Mcps.

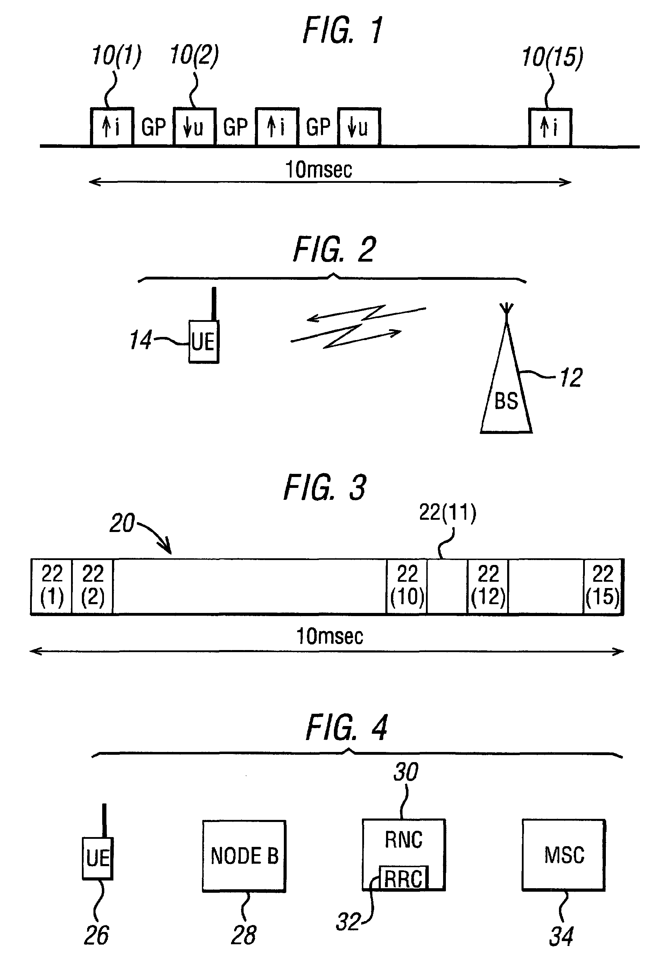

The reasons for the cell sizes are as follows: the frame structure specified for the UTRAN TDD is shown in Figure 1. Each frame consists of fifteen Radio Frequency (RF) time slots 10(1), 10(2), ... 10(15) separated by guard periods GP, the total frame length equaling 10 milliseconds. The time slots (in this example) are alternately uplink and downlink, indicated by the arrows u and i.

The guard periods GP are each of length 96 chip and each guard period is used for the timing advance to allow for signal return delay. The time of a guard period is

$$\frac{96\ chip}{3.84\ Mcps} = 25\ \text{microseconds.}$$

Figure 2 shows a Base Station (BS) 12 and mobile User Equipment (UE) 14. The cell size is limited as follows; -

If

c = speed of light
t = guard period
x = distance between UE 14 and BS 12

then, to allow for a distance of travel 2x in the guard period

$$x = \frac{ct}{2} = \frac{300{,}000\ \text{km/s}}{2} \text{x25 microseconds} = 3.75\ \text{km}$$

Thus the maximum cell size is 3.75 km for wideband TDD at 3.84 Mcps, and three times 3.75 km for narrowband TDD at 1.28 Mcps, assuming that the guard period is the only constraint on cell size. These ranges assume that there is no RF link budget constraint.

Commercially, the 3,84 Mcps TDD option of UTRAN has not been regarded favorably, by reason of the limited cell size.

It is the object of the invention to provide an increased cell size with minimum modification to hardware and software.

According to the invention a method of operating a UTRAN by the technique of time division duplexing in which uplink and downlink data are provided in time slots, the time slots being grouped into frames of fixed length, characterized in that in each frame one time slot is maintained in a no-transmit condition, all time slots in the frame preceding said time slot being one of uplink or downlink time slots and all time slots succeeding said time slot being the other of uplink and downlink time slots.

Also according to the invention a Node B or a Radio Network Controller for a Universal Mobile Telephone System, the node B or Controller being arranged to configure time slots in data frames which it transmits to user equipment and to receive data frames having that configuration, characterized in that in every frame one time slot is maintained in a no-transmit condition, all time slots in the frame preceding said time slot being one of uplink or downlink time slots and all time slots succeeding said time slot being the other of uplink and down link time slots.

In the accompanying drawings, figures 1 and 2 illustrate the prior art. The invention will be described with reference to figures 3 and 4 in which :-

Figure 3 illustrates a modified TDD frame; and
Figure 4 illustrates a UTRAN.

Figure 3 shows a TDD frame 20 having fifteen time slots 22(1) to 22(15). One time slot 22(11) is maintained in a no-transmit condition, and is the switching point time slot. In the example, this is the eleventh time slot. All time slots 22(1) to 22(10) preceding the switching time slot 22(11) are uplink time slots and all time slots 22(12) to 22(15) succeeding switching time slot 22(11) are downlink time slots. The frame length remains at 10 milliseconds.

In effect, the time allowed for transfer of information to and from the mobile equipment is now

$$\frac{10\ \text{milliseconds}}{15} = 666.67\ \text{microseconds}$$

and multiplication by the speed of light gives a maximum returned signal path of 200 km, thus the maximum distance of UE 14 from BS 12 is now 100 km.

The cell is now comparable in size with a UTRAN FDD cell.

Figure 4 illustrates schematically a UTRAN according to the invention. UE 26 communicates with Node B 28 which is controlled by a Radio Network Controller (RNC) 30 containing a Radio Resource Control (RRC) logical block 32. The RNC 30 is controlled by a Mobile Switching Center (MSC) 34.

By implementation of the invention, UE 26 can now communicate with Node B 28 up to a distance of 100 km.

Usually the invention will be implemented in the RRC 32, but it can alternatively be implemented in Node B 28. In either case the resident software is arranged to control the frame structure as described above. Since Node B 28 will continue to instruct UE 26 how to configure itself, no modifications to the mobile equipment are required.

A network operator has the opportunity, on network configuration, of selecting a larger cell size than has previously been possible with a TDD interface.

The removal of the time delay as a constraint on cell size in TDD has further advantages. Since a longer guard period is now provided, the power spectrum mask specification for the RF amplifier in the Node B28 can be relaxed, giving a financial saving, because the tolerance of the filtering within the RF system can be reduced. Also there is an on/off switching only once in every frame, any disturbance occurs at 100Hz, ie nearly out of an adult's audible range, so that lower power and cheaper amplification can be used while retaining required emc performance.

Naturally, the transmission power and reception sensitivity of the hardware need to be capable of dealing with the greater distance involved in the larger cell.

In general, application of the invention is expected to result in a capacity reduction of only about 6.7%.

The invention can be applied in a packet switched network as described in the example, or in a circuit switched network.

**Claims**

1.  A method of operating a UTRAN by the technique of time division duplexing, in which uplink and downlink data are provided in time slots, the time slots being grouped into frames of fixed length, **characterized in that** in each frame one time slot (22(11)) is maintained in a no-transmit condition, all time slots (22(1) to 22(10)) in the frame preceding said time slot (22(11)) are one of uplink or down link time slots and all time slots (22(12) to 22(15)) succeeding said time slot (22(11)) being the other of uplink and downlink time slots.

2.  A method according to Claim 1 in which said time slot (22(11)) maintained in a no-transmit condition is not the first or last time slot in a frame.

3.  A Node B (28) for a Universal Mobile Telephone System, the Node B being arranged to configure time slots in data frames of fixed length which it transmits to user equipment (26) and to instruct user equipment to receive and transmit data frames having that configuration, **characterized in that** in each frame is arranged so that one time slot (22(11)) is maintained in a no-transmit condition, all time slots (22(1) to 22(10)) in the frame preceding said time slot (22(11)) are one of uplink or down link time slots and all time slots (22(12) to 22(15)) succeeding said time slot (22(11)) being the other of uplink and downlink time slots.

4.  A radio network controller (30) for a Universal Mobile Telephone System, the Controller being arranged to configure time slots in data frames of fixed length which it transmits to user equipment (26) and to instruct user equipment to receive and transmit data frames having that configuration, **characterized in that** each frame is arranged so that one time slot (22(11)) is maintained in a no-transmit condition, all time slots (22(1) to 22(10)) in the frame preceding said time slot (22(11)) are one of uplink or down link time slots and all time slots (22(12) to 22(15)) succeeding said time slot (22(11)) being the other of uplink and downlink time slots.

5.  A mobile telecommunications network having a UTRAN comprising at least one Radio Network Controller (30), the or each Radio Network Controller controlling at least one Node B (28), and user equipment (26) communicating with a Node B, in which uplink and downlink data are provided in time slots, the time slots being grouped into frames of fixed length, **characterised in that** in each frame one time slot (22(11)) is maintained in a no-transmit condition, all time slots (22(1) to 22(10)) in the frame preceding said time slot (22(11)) are one of uplink or down link time slots and all time slots (22(12) to 22(15)) succeeding said time slot (22(11)) being the other of uplink and downlink time slots.

6.  A network according to Claim 5 which is a packet switched network.

7.  A network according to Claim 5 which is a circuit switched network.

## FIG. 1

10(1)  10(2)  10(15)

↑i  GP  ↓u  GP  ↑i  GP  ↓u  ↑i

10msec

## FIG. 2

14 — UE

BS — 12

## FIG. 3

20

| 22 (1) | 22 (2) | | 22 (10) | 22(11) | 22 (12) | | 22 (15) |

10msec

## FIG. 4

30

UE    NODE B    RNC    MSC
                 RRC

26      28      32  30    34

**European Patent Office**

## EUROPEAN SEARCH REPORT

Application Number

EP 00 31 0068

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 444 698 A (KITO EIJI) 22 August 1995 (1995-08-22) | 1,3-7 | H04Q7/36 |
| Y | * column 2, line 42 - column 3, line 10 * * column 6, line 54 - column 7, line 15 * | 2 | |
| Y | LINDSTROEM M ET AL: "DYNAMIC LINK ASYMMETRY IN 'BUNCHED' WIRELESS NETWORKS" AMSTERDAM, SEPT. 19 - 22, 1999,NEW YORK, NY: IEEE,US, vol. CONF. 50, September 1999 (1999-09), pages 352-356, XP000929070 ISBN: 0-7803-5436-2 * page 353, right-hand column, paragraph III - page 354, left-hand column, paragraph III * | 2 | |

| TECHNICAL FIELDS SEARCHED (Int.Cl.7) |
|---|
| H04Q |

The present search report has been drawn up for all claims

| Place of search | Date of completion of the search | Examiner |
|---|---|---|
| BERLIN | 8 May 2001 | Rothlübbers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 00 31 0068

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2001

| Patent document cited in search report | Publication date | Patent family member(s) | | Publication date |
|---|---|---|---|---|
| US 5444698 A | 22-08-1995 | JP | 2526496 B | 21-08-1996 |
| | | JP | 7038954 A | 07-02-1995 |
| | | GB | 2280824 A,B | 08-02-1995 |

EPO FORM P0459

For more details about this annex : see Official Journal of the European Patent Office, No. 12/82